# EUROPÄISCHE PATENTSCHRIFT

(11) **EP 1 825 161 B1**
(45) Veröffentlichungstag und Bekanntmachung des Hinweises auf die Patenterteilung: **10.11.2010**
(21) Anmeldenummer: 05787286.3
(22) Anmeldetag: 07.09.2005
(51) Int. Cl.: F16D 41/20

(54) **STELLANTRIEB ZUR BETÄTIGUNG EINER ARMATUR**
ACTUATING MECHANISM FOR ACTUATING A FITTING
ENTRAINEMENT DE REGLAGE POUR ACTIONNER UNE ARMATURE

(30) Priorität: 16.12.2004 DE 102004061162
(43) Veröffentlichungstag der Anmeldung: 29.08.2007
(73) Patentinhaber: AUMA Riester GmbH & Co. KG, 79379 Müllheim (DE)
(72) Erfinder: WASSER, Tobias, D- 79102 Freiburg (DE); BAUMGARTNER, Johannes, 79379 Müllheim (DE)
(74) Vertreter: Andres, Angelika Maria
(86) Internationale Anmeldenummer: PCT/EP2005/054400
(87) Internationale Veröffentlichungsnummer: WO 2006/063874

(56) Entgegenhaltungen:
- DE-A1- 10 234 501
- DE-A1- 19 933 285
- GB-A- 2 054 725
- US-A- 3 110 380
- US-A- 4 614 257

## Beschreibung

Die Erfindung betrifft einen Stellantrieb zur Betätigung einer Armatur mit einem Antriebsteil, einer Abtriebswelle, die mit der Armatur verbindbar ist, und mit einer Drehmomentsperre, die mit der Abtriebswelle verbindbar ist.

Aus dem Stand der Technik sind Drehmomentsperren bereits bekannt geworden. Drehmomentsperren ermöglichen einen ungehinderten Dreh-antrieb eines Maschinenteils - beispielsweise mit Hilfe eines Handrads - in beiden Drehrichtungen, wohingegen rückwirkende Drehmomente des getriebenen Teils auf den Antrieb möglichst in beide Richtungen gesperrt werden, ohne dass hierzu eine zusätzliche Bremseinrichtung erforderlich ist. Eine aus der DE 85099971 U bekannte Drehmoment- bzw. Lastmoment-sperre arbeitet nach dem Klemmrollen- bzw. Klemmkeilprinzip. Hierbei ist innerhalb eines geschlossenen ringförmigen Gehäuses ein passender zylindrischer Innenkörper angeordnet, welcher mit dem Abtriebsteil, also dem anzutreibenden Teil, drehfest verbunden ist. Der zylindrische Innenkörper weist am Außenumfang eine Aussparung auf, in welcher jeweils von Klemmfedern nach außen gedrückte Klemmrollen angeordnet sind. Diese verhindern eine Verdrehung des zylindrischen Innenkörpers gegenüber dem ringförmigen äußeren Gehäuse. Zwischen den beiden Klemmrollen ist ein stegförmiges Antriebsteil, das z.B. Bestandteil eines Handrades ist, angeordnet. Wird dieses Antriebsteil in die eine oder die andere Drehrichtung gedreht, so wird eine der beiden Klemmrollen gegen die Kraft der Anpress-feder gelöst und das Abtriebsteil lässt sich verstellen. Hierbei befindet sich die zweite Klemmrolle im Leerlauf. Rückdrehmomente vom Abtriebsteil werden hingegen in beiden Drehrichtungen gesperrt.

Ein Stellantrieb der die Grundlage bildet für den Oberbegriff des Anspruchs 1, ist aus DE 10234501 bekannt.

Diese Drehantriebe mit Drehmomentsperren nach dem Klemmrollenprinzip werden beispielsweise zur Lagesicherung an Verstellantrieben bei Maschinen-teilen eingesetzt. Ferner dienen Sie z.B. zur Sicherung und Handverstellung von Torantrieben, zur Luken- und Fenstersicherung oder zur Rückschlag-sicherung bei Regel- und Absperrklappen. Der Nachteil der bekannten Drehmomentsperre nach dem Klemmrollen- oder auch Klemmkeil-Prinzip ist darin zu sehen, dass diese Drehmomentsperren ein relativ kritisches Sperrverhalten zeigen können. Zudem zeigt sich bei ihnen ein relativ hoher Verschleiß, da durch das Einklemmen mit nachfolgendem Lösen der Klemmelemente die miteinander in Kontakt kommenden Teile hohen Reibkräften ausgesetzt sind. Aufgrund der Abnutzung oder aufgrund der geringsten Verformung des Materials kann es zu einer kontinuierlichen Verschlechterung der Sperrfunktion kommen.

Der Erfindung liegt die Aufgabe zugrunde, einen Stellantrieb vorzuschlagen, bei dem rückwirkende Drehmomente von der Armatur nicht auf das Antriebsteil übertragen werden.

Die Aufgabe wird durch die Merkmale des Hauptanspruchs gelöst, so dass die bei dem erfindungsgemäßen Stellantrieb verwendete Drehmomentsperre zumindest ein in einem ringförmigen Gehäuse angeordnetes, im wesentlichen rotationssymmetrisch ausgebildetes Federelement aufweist, wobei die Drehmomentsperre so ausgelegt ist, dass ein über das Antriebsteil eingeleitetes Drehmoment die Abtriebswelle in Drehung versetzt und dass ein über die Armatur eingeleitetes Drehmoment die Drehung der Abtriebswelle sperrt. Das Feder-element ist so ausgestaltet, dass die Drehmomentsperre für unterschiedliche Drehmomentbereiche in hohem Maße zuverlässig arbeitet.

Es ist vorgesehen, dass es sich bei dem rotationssymmetrischen Federelement um eine Schlingbandfeder handelt. Eine spezielle Ausgestaltung schlägt insbesondere vor, dass an das Antriebsteil ist zumindest ein Mitnehmerelement vorgesehen, während an der Abtriebswelle zumindest ein Sperrstück angeordnet ist. Desweiteren sind die beiden Endbereiche der Schlingband-feder so ausgestaltet und angeordnet, dass im Falle einer Einleitung des Drehmoments über das Antriebsteil das zumindest eine Mitnehmerelement mit den beiden Endbereichen der Schlingbandfeder so zusammenwirkt, dass die Drehmomentsperre entriegelt und die Abtriebswelle dreht; im Falle einer Einleitung des Drehmoments über die Armatur hingegen wirkt das zumindest eine Sperrstück mit zumindest einem der beiden Endbereiche der Schling-bandfeder so zusammen, dass die Drehmomentsperre sperrt. Bevorzugt weist der Federdraht der Schlingbandfeder einen quadratischen Querschnitt auf. Allerdings kann der Querschnitt des Federdrahtes der Schlingbandfeder auch rund sein. Die Last- bzw. Drehmomenteinleitung in die Schlingbandfeder erfolgt bevorzugt über umgebogenen Federenden. Die umgebogenen Federenden sind bezüglich der Festigkeit derart optimiert, dass die Drehmomentsperre in hohem Maße prozessstabil arbeitet.

Prinzipiell kann es sich bei dem Antriebsteil um jede beliebige Art von Antrieb handeln. Beispielhaft sei ein Direktantrieb genannt, der im Zusammenhang mit dem erfindungsgemäßen Stellantrieb so beschaffen sein muss, dass er bei kleinen Drehzahlen ein hohes Drehmoment erzeugt. Weiterhin kann es sich bei dem Antriebsteil um einen Elektromotor oder um einen Elektromotor mit angekoppeltem Untersetzungsgetriebe handeln. Weiterhin ist es möglich, dass es sich bei dem Antriebsteil um ein separat betätigbares Stellrad oder um ein separat betätigbares Stellrad mit angekoppeltem Untersetzungs-getriebe handelt. Vorzugsweise wird als separat betätigbares Stellrad ein Handrad eingesetzt.

Eine bevorzugte Ausführungsform des erfindungsgemäßen Stellantriebs sieht ein zweites Untersetzungsgetriebe vor, das zwischen der Armatur und der Drehmomentsperre angeordnet ist. Insbesondere wird als zweites Untersetzungsgetriebe ein Schneckengetriebe eingesetzt. Schneckengetriebe sind üblicherweise so ausgelegt, dass sie eine intrinsische Selbsthemmung aufweisen. Zwar wird hierdurch der Gesamtwirkungsgrad herabgesetzt, jedoch lässt sich durch die intrinsische Selbsthemmung eine zufällige und unerwünschte Drehung der Antriebswelle effektiv verhindern. In Folge der Selbsthemmung wird sich die Antriebswelle erst in Bewegung setzen, wenn ein definiertes Drehmoment, das die Selbsthemmung ausgleicht, überschritten wird. Hier zeigt sich ein entscheidender Vorteil des erfindungsgemäßen Stellantriebs: Da der Stellantrieb eine Drehmomentsperre aufweist, kann auf die intrinsische Selbsthemmung des Untersetzungsgetriebes verzichtet werden. Diese Ausgestaltung des erfindungsgemäßen Stellantriebs weist daher gegenüber der bekannten Lösung einen erhöhten Gesamtwirkungs-grad auf.

Vorteilhafter Weise ist die Drehmomentsperre, die bei dem erfindungs-gemäßen Stellantrieb zum Einsatz kommt, als integrale Komponente des Antriebsteils ausgestaltet. Allerdings sieht eine alternative Ausführungsform vor, dass es sich bei der Drehmomentsperre um ein eigenständiges Funktionsmodul handelt, das so ausgestaltet und ausgebildet ist, dass es an die Abtriebswelle ankoppelbar ist. Diese Ausgestaltung erlaubt es, einen beliebigen Stellantrieb mit der erfindungsgemäßen Drehmomentsperre nachzurüsten.

Die Erfindung wird anhand der nachfolgenden Figuren näher erläutert. Es zeigt:

Fig. 1a: eine schematische Darstellung einer ersten Ausgestaltung des erfindungsgemäßen Stellantriebs,

Fig. 1b: eine schematische Darstellung einer zweiten Ausgestaltung des erfindungsgemäßen Stellantriebs,

Fig. 2: eine modellhafte Explosionsdarstellung einer bevorzugten Ausführungsform der erfindungsgemäßen Drehmomentsperre,

Fig. 3: einen Längsschnitt durch eine bevorzugte Ausgestaltung der erfindungsgemäßen Drehmomentsperre und

Fig. 3a: einen Querschnitt gemäß der Kennzeichnung A-A in Fig. 3.

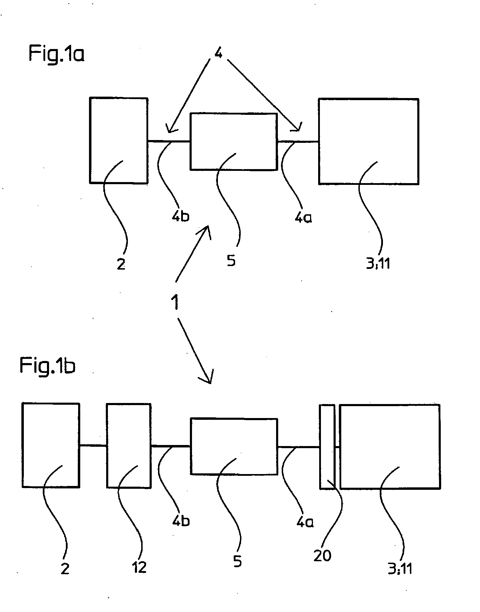

In den Figuren Fig. 1a und Fig. 1b sind alternative Ausführungsformen des erfindungsgemäßen Stellantriebs 1 schematisch dargestellt. Bei der in Fig. 1a gezeigten Ausführungsform betätigt der Antriebsteil 3 die Armatur 2 direkt über die Abtriebswelle 4. Bei der Armatur 2 handelt es sich bevorzugt um ein Stellglied 2, z.B. um ein Ventil oder um einen Schieber jeweils mit Spindel und Gewindebuchse, um eine Drossel oder um eine Klappe. In Abhängigkeit von dem Stellglied 2 ist die Betätigung bzw. der Verstellvorgang, der über die Antriebseinheit 3 eingeleitet wird, eine Dreh- oder Schwenkbewegung. Bei der Antriebseinheit 3 handelt es sich bevorzugt um einen Direktantrieb 11. Allerdings ist es auch möglich, dem Elektromotor ein erstes Untersetzungs-getriebe 20 nachzuschalten. Es versteht sich von selbst, dass alternativ oder additiv zu dem elektrischen Antriebsteil 3 auch ein separat betätigbares Stellrad, z.B. ein Handrad zur manuellen Betätigung der Armatur verwendet werden kann. Der Abtriebswelle 4 ist die Drehmoment-sperre 5 zugeordnet.

Fig. 1b zeigt eine schematische Darstellung einer zweiten Ausgestaltung des erfindungsgemäßen Stellantriebs 1. Von der in Fig. 1a gezeigten Ausführungsform unterscheidet sich die in Fig. 1b gezeigte durch ein zweites Untersetzungsgetriebe 12, das zwischen der Drehmomentsperre 5 und der Armatur 2 an der Drehmomentsperrenabtriebswelle 4b angeordnet ist. Bei dem Untersetzungsgetriebe 12 handelt es sich bevorzugt um ein Schnecken-getriebe. Schneckengetriebe besitzen üblicherweise eine intrinsische Selbsthemmung, die unbeabsichtigte Drehungen der Abtriebswelle 4 unterbinden soll. Diese Ausgestaltung eines Stellantriebs 1 ist besonders vorteilhaft, da aufgrund der zwischengeschalteten Drehmomentsperre 5 auf diese intrinsische Selbsthemmung des Schneckengetriebes 12 verzichtet werden kann, wodurch sich der Gesamt-Wirkungsgrad des Stellantriebs 1 verbessern lässt.

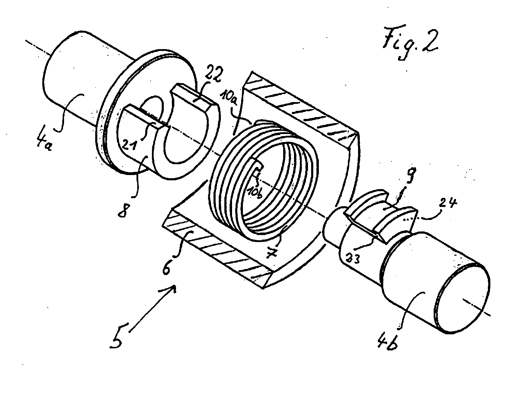

In Fig. 2 ist eine modellhafte Explosionsdarstellung einer bevorzugten Ausführungsform der erfindungsgemäßen Drehmomentsperre 5 dargestellt. Die wesentlichen Komponenten der erfindungsgemäßen Drehmomentsperre sind die in einem Gehäuse / Sperrring 6 angeordnete Schlingbandfeder 7 und eine zweigeteilte Abtriebswelle 4 mit einem Mitnehmermechanismus 8 auf der Antriebsseite und einem Sperrmechanismus 9 auf der Abtriebsseite. An der Drehmomentsperrenantriebswelle 4a ist ein Mitnehmerelement 8 angebracht; an der Drehmomentsperrenabtriebswelle 4b ist das Sperrstück 9 befestigt. Das Mitnehmerelement 8 hat die Form eines Teilstücks eines Zylinder-mantels. Die beiden Endbereiche 21, 22 des Mitnehmerelements 8 liegen an den Innenseiten der Federenden 10a, 10b der Schlingbandfeder 7 an.

Die Schlingbandfeder 7 ist in dem Sperrring 6 angeordnet. Bevorzugt weist der Federdraht der Schlingbandfeder 7 einen quadratischen Querschnitt auf. Allerdings kann der Querschnitt des Federdrahtes der Schlingbandfeder 7 auch rund sein.

An der Drehmomentsperrenabtriebswelle 4b ist - wie bereits gesagt - das Sperrstück 9 vorgesehen. Das Sperrstück 9 hat eine teilkreisflächige Form. Die radialen Begrenzungsflächen bilden die Endbereiche 23, 24 des Sperrstücks 9. Der erste Endbereich 23 bzw. der zweite Endbereich 24 des Sperrstücks 9 wirken im Falle einer Drehmomenteinleitung von der Armatur 2 her auf das umgebogene Federende 10a bzw. auf das umgebogene Federende 10b. Die umgebogenen Federenden 10a, 10b sind übrigens bezüglich der Festigkeit derart optimiert, dass die Drehmomentsperre 5 in hohem Maße prozessstabil arbeitet.

Sobald sich die Drehmomentsperrenantriebswelle 4a aufgrund einer Drehmomenteinleitung vom Antriebsteil 3 her dreht, treibt das Mitnehmerelement 8 mit jeweils einem der Endbereiche 21 bzw. 22 über die Innenseite des Federendes 10a bzw. 10b die Schlingbandfeder 7. Die Schlingbandfeder 7 wird hierdurch von dem Sperrring 6 gelöst, wodurch eine Drehung der Abtriebswelle 4 zugelassen wird.

Wird hingegen ein rückwirkendes Drehmoment von der Armatur 2 her über die Drehmomentsperrenabriebswelle 4b eingeleitet, so drückt je nach Dreh-richtung der jeweilige Endbereich 23 bzw. 24 des Sperrstücks 9 von außen auf das Federende 10a bzw. auf das Federende 10b. Hierdurch wird die Schlingbandfeder 7 kraftverstärkt gegen den Sperrring 6 gepresst. Durch diese Verpressung wird eine Drehung der Abtriebswelle 4 effektiv verhindert. Sobald wiederum eine Einleitung eines Drehmoments von dem Antriebsteil 3 her erfolgt, wird die Schlingbandfeder 7 wieder von dem Sperrring 6 gelöst, und die Sperrwirkung der Drehmomentsperre 5 wird aufgehoben.

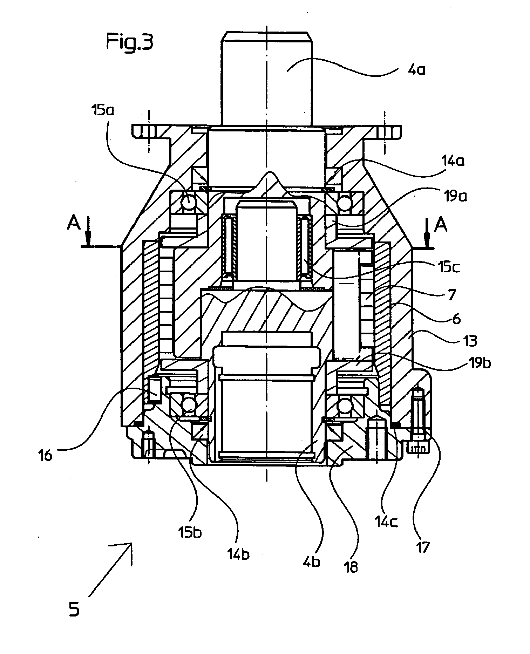

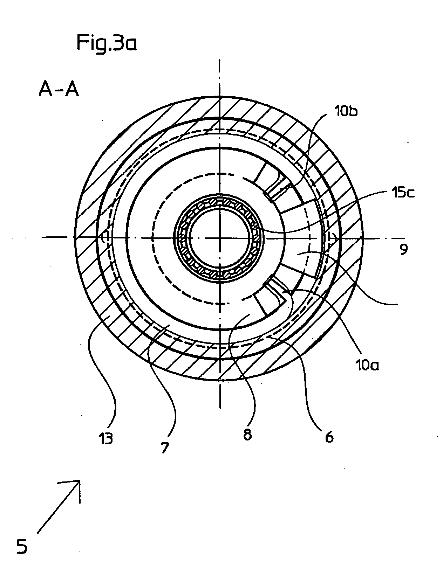

Fig. 3 zeigt eine detaillierte Darstellung eines Längsschnitts durch eine bevorzugte Ausgestaltung der erfindungsgemäßen Drehmomentsperre 5. In Fig. 3a ist ein Querschnitt gemäß der Kennzeichnung A-A in Fig. 3 zu sehen. Die erfindungsgemäße Drehmomentsperre 5 ist in einem Gehäuse 13 mit adaptiertem Flansch 18 angeordnet. Die Drehmomentsperre 5 ist auf der Abtriebswelle 4 angeordnet.

Die wesentlichen Komponenten der Drehmomentsperre 5 sind die Schlingbandfeder 7, die in dem Sperrring 6 positioniert ist, die Drehmomentsperren-antriebswelle 4a mit dem Mitnehmerelement 8 und die Drehmomentsperren-abtriebswelle 4b mit dem Sperrstück 9. Selbstverständlich könnte die Drehmomentsperre 5 auch so konstruiert sein, dass der Sperrring 6 Teil des Gehäuses 13 ist. Die Distanzscheiben 19a, 19b dienen übrigens der Fixierung der axialen Lage der Schlingbandfeder 7.

Die Drehmomentsperre 5 ist über die Lager 15a, 15b, 15c auf der Abtriebs-welle 4 gelagert. Im gezeigten Fall handelt es sich bei den Lagern 15a, 15 um Kugellager, während das Lager 15c als Nadellager ausgeführt ist. Desweiteren ist die Drehmomentsperre 5 über die Dichtungen 15a, 15b, 15c, bei denen es sich bevorzugt um O-ring Dichtungen handelt, gegen die Abtriebswelle 4 abgedichtet. Der dem Antriebsteil 3 (in der Fig. 3 nicht gesondert dargestellt) zugewandte Teil des Gehäuses 13 ist im gezeigten Fall als Flansch ausgebildet.

## Patentansprüche

1. Stellantrieb (1) zur Betätigung einer Armatur (2) mit einem Antriebsteil (3), einer Abtriebswelle (4), die mit der Armatur (2) verbindbar ist, und mit einer Drehmomentsperre (5), die mit der Abtriebswelle (4) verbindbar ist,
wobei es sich bei der Drehmomentsperre (5) um zumindest ein in einem ringförmigen Gehäuse (6) angeordnetes, im wesentlichen rotationssymmetrisch ausgebildetes Federelement (7) mit zwei Endbereichen (10a, 10b) handelt,
wobei an dem Antriebsteil (3) zumindest ein Mitnehmerelement (8) vorgesehen ist, wobei es sich bei dem rotationssymmetrischen Federelement (7) um eine Schlingbandfeder handelt,
wobei an der Abtriebswelle (4) zumindest ein Sperrstück (9) vorgesehen ist, wobei die beiden Endbereiche (10a, 10b) der Schlingbandfeder so ausgestaltet und angeordnet sind, dass im Falle einer Einleitung des Drehmoments über das Antriebsteil (3) das zumindest eine Mitnehmerelement (8) mit den beiden Endbereichen (10a, 10b) der Schlingbandfeder so zusammenwirkt, dass die Drehmomentsperre (4) entriegelt ist und die Abtriebswelle (4) dreht, und wobei im Falle einer Einleitung des Drehmoments über die Armatur (2) das zumindest eine Sperrstück (9) mit den beiden Endbereichen (10a, 10b) der Schlingbandfeder (7) so zusammenwirkt, dass die Drehmomentsperre (5) sperrt.

2. Vorrichtung nach Anspruch 1,
wobei es sich bei dem Antriebsteil (3) um einen Direktantrieb (11) handelt.

3. Vorrichtung nach Anspruch 1 oder 2,
wobei es sich bei dem Antriebsteil (3) um einen Elektromotor (11) oder um einen Elektromotor mit angekoppeltem Untersetzungsgetriebe (20) handelt.

4. Vorrichtung nach Anspruch 1 oder 2,
wobei es sich bei dem Antriebsteil (3) um ein separat betätigbares Stellrad oder um ein separat betätigbares Stellrad mit angekoppeltem Untersetzungsgetriebe (20) handelt.

5. Vorrichtung nach einem oder mehreren der vorhergehenden Ansprüche,
wobei ein zweites Untersetzungsgetriebe (12) vorgesehen ist, das zwischen der Armatur und der Drehmomentsperre (5) angeordnet ist.

6. Vorrichtung nach Anspruch 6,
wobei es sich bei dem zweiten Untersetzungsgetriebe (12) um ein Schneckengetriebe handelt.

7. Vorrichtung nach einem oder mehreren der vorhergehenden Ansprüche,
wobei die Drehmomentsperre (5) integrale Komponente des Antriebsteils (3) ist.

8. Vorrichtung nach einem oder mehreren der vorhergehenden Ansprüche,
wobei die Drehmomentsperre (5) als eigenständiges Funktionsmodul ausgestaltet und so ausgebildet ist, dass es an die Abtriebswelle (4) ankoppelbar ist.

## Claims

1. Actuator (1) for operating a valve (2) with a drive component (3), a drive shaft (4), which is connectable with the valve (2), and a torque lock (5), which is connectable with the drive shaft (4), whereby said torque lock (5) includes of at least one essentially rotationally symmetric spring element (7) with two end regions (10a, 10b) arranged in a ring-shaped housing (6), whereby at least one entraining element (8) is provided on the drive shaft (3), whereby the rotationally symmetric spring element (7) is a wrap spring, whereby at least one blocking element (9) is provided on the drive shaft (4), whereby the two end regions (10a, 10b) of the wrap spring (7) are so embodied and arranged that, in the case of an introduction of the torque via the drive component (3) the at least one entraining element (8) so interacts with the two end regions (10a, 10b) that the torque lock (4) is unlocked and the dirve shaft (4) rotates; and that, in the case of introduction of the torque via the valve (2), the at least one blocking element (9) interacts with the two end regions (10a, 10b) of the wrap spring (7) in such a way that the torque lock (5) locks.

2. Actuator as claimed in claim 1, where the drive component (3) is a direct drive (11).

3. Actuator as claimed in claim 1 or 2, where the drive component (3) is an electric motor (11) or an electric motor with a coupled reduction gear unit (20).

4. Actuator as claimed in claim 1 or 2, where the drive component (3) is an adjusting wheel that can be actuated separately, or an adjusting wheel that can be actuated separately with a coupled reduction gear unit (20).

5. Actuator as claimed in one or more of the previous claims, **characterized in that** a second reduction gear unit (12) is provided and is arranged between the assembly and the torque block (5).

6. Actuator as claimed in claim 6, **characterized in that** the second reduction gear unit (12) is a worm gear.

7. Actuator as claimed in one or more of the previous claims, **characterized in that** the torque block (5) is an integral part of the drive component (3).

8. Actuator as claimed in one or more of the previous claims, **characterized in that** the torque block (5) is designed as an independent function module and developed in such a way that it can be coupled to the output shaft (4).

## Revendications

1. Mécanisme (1) destiné à la commande d'une sonde (2) avec une pièce d'entraînement (3) et un arbre de sortie (4), lequel peut être relié avec la sonde (2), et avec un dispositif de blocage de couple (5), lequel peut être relié avec l'arbre de sortie (4), dispositif de blocage du couple (5) pour lequel il s'agit au minimum d'un élément à ressort (7) pour l'essentiel à symétrie de révolution, disposé dans un boîtier (6) annulaire, élément à ressort doté de deux zones d'extrémité (10a, 10b),
un élément d'entraînement (8) étant au minimum prévu sur la pièce d'entraînement (3), l'élément à ressort (7) à symétrie de révolution étant un ressort à enroulement,
une pièce de blocage (9) étant au minimum prévue sur l'arbre de sortie (4), les deux zones d'extrémité (10a, 10b) étant conçues et disposées de telle manière qu'en cas de déclenchement du couple par le biais de la pièce d'entraînement (3), l'élément d'entraînement (8) d'au moins une unité agissant conjointement avec les deux zones d'extrémité (10a, 10b) du ressort à enroulement, de telle manière que le dispositif de blocage de couple (5) soit débloqué et que l'arbre de sortie (4) tourne et, en cas de déclenchement du couple via la sonde (2), l'élément de blocage (9) d'au moins une unité agissant conjointement avec les deux zones d'extrémité (10a, 10b) du ressort à enroulement (7), de telle manière que le dispositif de blocage de couple (5) bloque.

2. Dispositif selon la revendication 1,
pour lequel il s'agit, concernant la pièce d'entraînement (3), d'un entraînement direct (11).

3. Dispositif selon la revendication 1 ou 2,
pour lequel il s'agit, concernant la pièce d'entraînement (3), d'un moteur électrique (11) ou d'un moteur électrique avec réducteur (20) couplé.

4. Dispositif selon la revendication 1 ou 2,
pour lequel il s'agit, concernant la pièce d'entraînement (3), d'une roue de réglage commandable séparément ou d'une roue de réglage commandable séparément avec réducteur (20) couplé.

5. Dispositif selon l'une ou plusieurs des revendications précédentes,
pour lequel est prévu un deuxième réducteur (12), lequel est disposé entre la sonde et le dispositif de blocage de couple (5).

6. Dispositif selon la revendication 5,
pour lequel, concernant le deuxième réducteur (12), il s'agit d'un engrenage à vis sans fin.

7. Dispositif selon l'une ou plusieurs des revendications précédentes,
pour lequel le dispositif de blocage de couple (5) fait partie intégrante de la pièce d'entraînement (3).

8. Dispositif selon l'une ou plusieurs des revendications précédentes,
pour lequel le dispositif de blocage de couple (5) est conçu en tant que module fonctionnel autonome et de telle manière à ce qu'il puisse être couplé à l'arbre de sortie (4).
